# EUROPEAN PATENT SPECIFICATION

(11) **EP 1 560 054 B1**
(45) Date of publication and mention of the grant of the patent: **17.09.2008**
(21) Application number: 05250396.8
(22) Date of filing: 26.01.2005
(51) Int. Cl.: G02B 7/04, G02B 7/02

(54) **Objective lens unit having a mechanism for adjusting the focal point of the optical lens**
Objektiv mit einem Fokussierungsmechanismus
Objectif ayant un mécanisme permettant d'ajuster la mise au point

(30) Priority: 30.01.2004 JP 2004022726
(43) Date of publication of application: 03.08.2005
(73) Proprietor: Konica Minolta Opto, Inc., Hachioji-shi, Tokyo 192-8505 (JP)
(72) Inventor: Saito, Masashi, Konica Minolta Opto, Inc., Hachioji-shi Tokyo 192-8505 (JP); Sugiura, Mutsumi, Konica Minolta Opto, Inc., Hachioji-shi Tokyo 192-8505 (JP)
(74) Representative: Alton, Andrew

(56) References cited:
- EP-A- 1 174 748
- US-A- 5 612 826
- PATENT ABSTRACTS OF JAPAN vol. 2003, no. 06, 3 June 2003 (2003-06-03) -& JP 2003 037758 A (KONICA CORP), 7 February 2003 (2003-02-07)
- PATENT ABSTRACTS OF JAPAN vol. 2002, no. 08, 5 August 2002 (2002-08-05) -& JP 2002 118776 A (KONICA CORP), 19 April 2002 (2002-04-19)

## Description

### BACKGROUND OF THE INVENTION

This invention relates to an optical unit composed of plural optical members, an imaging device having the optical unit, and a portable terminal equipped with this imaging device.

Smaller and thinner imaging devices have been installed in portable terminals, which are small and thin electronic instruments such as portable telephones and PDAs (Personal Digital Assistant), and have made it possible to interactively transmit not only voice information but image information to remote places.

As image sensors used in these imaging devices, solid-state image sensors such as CCD (Charge Coupled Device) type image sensors and CMOS (Complementary Metal-Oxide Semiconductor) type image sensors are used.

Lately, with the increasing popularization of these portable terminals, those equipped with imaging devices each using an image sensor with a great number of pixels so as to obtain images of higher quality, have been supplied to the market. For the imaging devices, optical systems using plural lenses for improved resolution corresponding to the image sensors with a greater number of pixels have been used.

As an imaging optical system with plural lenses used for the portable terminal, there has been disclosed one wherein two lenses, made of a plastic material, are used so that the inner surface of flange of the one and the outer surface of flange of the other are the same in diameter and fitted parallel to the optical axis to position the two lenses in the direction of perpendicular to the optical axis. (Refer to Patent Document 1, for example)

For the purpose of preventing ghost or flare caused by unwanted light entering from the outside, there has been disclosed an optical unit wherein a supporting part which contacts an image sensor is made of light shielding resin and the lens part is made of translucent resin by injection molding on the supporting part and both parts are solidly integrated, and another one wherein a leg part formed on the lens on the photographed object side is pressed into and fitted with a step on the upper circumference of a leg part formed on the lens on the image plane side and a light shielding supporting member is located around the optical system, and moreover another one wherein, a lens on which pins are formed and another lens on which holes are formed are combined and an aperture plate is interposed as a spacer between the two lenses so as to position in the optical axis direction and in the direction perpendicular to the optical axis.
[Patent Document 1] TOKKAI2002-341218 (Fig. 9)
[Patent Document 2] TOKKAI2002-139662 (Fig. 10)

Regarding the imaging device described in the above Patent Document 1, positioning of two lenses in the direction perpendicular to the optical axis is possible, however, there is a drawback that an unstable focal point is caused by dispersion of the distance between the two lenses in the optical axis direction resulting from dispersion of thickness of the aperture plate existing between the two lenses. Besides, there is another problem that unwanted light other than a light flux of a photographed object which is propagated from the circumference-shaped engagement portion to the leg part formed on the lens on the image plane side, and lowers the image contrast of the photographed object.

Regarding the imaging device described in the above Patent Document 2, the one wherein a supporting part which contacts the image sensor is made of light shielding resin, and the lens part is made of translucent resin while both parts are solidly integrated by injection molding on the supporting part can solve the problem concerning unwanted light. However, it brings drawbacks of increased cost caused by insert molding, and dispersion of the distance between the two lenses in the optical axis direction is caused by dispersion of thickness of the aperture plate member placed between the two lenses, resulting in an unstable position of a focal point.

On the other hand, an optical unit wherein a leg part formed on the lens on the photographed object side is pressed into and fitted with a step on the upper circumference of a leg part formed on the lens on the image plane side, and a light shielding supporting member is located around the optical system avoids unwanted light entering from outer surface of optical system by means of the supporting member. However, there is a problem that unwanted light other than the light flux of photographing, among rays of light entering the plane of incidence of lens arranged on the photographed object side is propagated from the circumference-shaped engagement portion to the leg part formed on the lens on the image plane side, and lowers the image contrast of the photographed object.

Further, regarding an optical unit wherein a lens in which pins are formed and another lens in which holes are formed are combined and an aperture plate is interposed as a spacer between the two lenses so as to position the two lenses in the optical axis direction and the direction perpendicular to the optical axis also has the drawback that an unstable focal point is caused by dispersion of the distance between the two lenses in the optical axis direction, resulting from dispersion of thickness of the aperture plate placed between the two lenses. In addition, there is the problem that unwanted light, other than the light flux of the photographed object, which is propagated from the circumference-shaped engagement portion to the leg part formed on the lens on the image plane side and which results in lowered image contrast of the photographed object.

### SUMMARY OF THE INVENTION

In view.of the problems stated above, an objective of this invention is to attain an optical unit composed of plural optical members, wherein reduction of contrast of the photographed object image caused by unwanted light does not exist and at low cost, as well as that the focal point is stable without fluctuating, and further, it is also an objective to attain an imaging device equipped with this optical unit and a portable terminal equipped with this imaging device.
Structure 1) is an optical unit comprising:
   at least two light-transmitting optical members each having an optical effective surface and a retaining portion on at least a part of a circumference of the optical effective surface, at least one optical member of the two optical members is characterised by having at least three projections formed on the retaining portion of at least one surface thereof and the three projections being brought in contact with the other optical member to form a space between the two optical members and,
   a light shielding member interposed in the space and having an aperture and having at least three cutouts on an outer periphery of the light shielding member,
   wherein the projections are respectively positioned in the cutouts so that the outer periphery is expanded into the retaining portion.
Structure 2) is the optical unit of Structure 1), wherein the projections have contacting surfaces which are brought in contact with the other optical members in two positional directions of an optical axis direction and a direction of an optical axis direction and a direction perpendicular to the optical axis direction.
Structure 3) is the optical unit of Structure 1), wherein an outer diameter of the light shielding member is made equal to or larger than that of at least one optical member of the two optical members facing the light shielding member.
Structure 4) is an optical unit of Structure 1), wherein the aperture of the light shielding member is formed to be substantially rectangular.
Structure 5) is the optical unit of Structure 1), wherein the optical unit has at least first, second and third optical members, and a first set of at least three projections provided on the retaining portion between the first and second optical members and a second set of at least three projections provided on the retaining portion between the second and third optical members, and
   wherein positions of the first set of at least three projections are different from positions of the second set of at least three projections projected on the same circle.
Structure 6) is an imaging device having the optical unit of Structure 1).
Structure 7) is a portable terminal having the imaging device of Structure 6).
   Owing to the optical unit of the invention, composed of at least two optical members each having an optical effective surface and a retaining portion on at least part of the circumference of the optical effective surface and a light shielding member with an aperture which is placed between the optical members, wherein at least one of the optical members has at least three projections which contact the other optical member on portions other than the optical effective surfaces of at least one surface and a part of the light shielding member is interposed at a portion other than the optical effective surface of the optical member excluding the projections, it is possible to obtain an optical unit composed of plural optical members, wherein reduction of contrast of the photographed object image caused by unwanted light is eliminated and the cost is low, as well as featuring a focal point which is stable.

It is desirable that the projections contact the other optical member in both the optical axis direction and the direction perpendicular to the optical axis to position the optical members so that it becomes possible to position in the optical axis direction and the direction perpendicular to the optical axis with simple structure and without any other parts, and it becomes possible to obtain optical unit which is featuring a stable focal point, at low cost.

It is desirable that the diameter of the light shielding member is at least as large as either one of the two optical members facing the light shielding member, to prevent unwanted light passing through optical member, other than the optical effective surface from traveling to the optical member on the image plane side.

It is preferable to form said aperture to be substantially rectangular, and thereby, only a light flux necessary for photographing can be conducted to the imaging plane side and the image contrast of a photographed object can be further improved.

It is desirable that the optical unit has at least three optical members and each portion, other than the optical effective surface, of at least two surfaces among the surfaces of the optical members constituting the optical unit has projections, wherein the projections on one surface and the projections on the other surface are located at positions which differ from each other in terms of phase in the circumferential direction, and thereby, unwanted light passing through the projections can also be shielded.

With an imaging device equipped with any of the optical units described above, or by installing the imaging device in a portable terminal, it becomes possible to attain an imaging device or a portable terminal having the effects described above.

### BRIEF DESCRIPTION OF THE DRAWINGS

Fig. 1 shows the general appearance of a portable telephone, representing an example of a portable terminal having an imaging device of the invention.
Fig. 2 is a perspective view of imaging device having an optical unit of the invention.
Fig. 3 is a general cross-sectional view showing an internal structure of an imaging device having an optical unit of the invention.
Fig. 4 is an exploded perspective view showing the structure of No. 1 lens, No. 2 lens and an aperture plate located between No. 1 lens and No. 2 lens.
Fig. 5 is an exploded perspective view showing the structure of No. 2 lens, No. 3 lens and an aperture plate located between No. 2 lens and No. 3 lens.
Fig. 6 is a cross-sectional view of the optical unit related to this invention.
Fig. 7 is a perspective view of the optical unit integrated into one unit.
Fig. 8 is a perspective view of cam member.
Fig. 9 is a cross-sectional view of the optical unit installed in an imaging device showing the position for close-up photography and the position where a long distance is in focus.
Fig. 10 is a cross-sectional view showing an internal structure of another example of an imaging device having an optical unit of the invention.
Fig. 11 is an exploded perspective view showing the structure of No. 1 lens, No. 2 lens, No.3 lens 3, an aperture plate located between No. 1 lens and No. 2 lens and an aperture plate located between No. 2 lens and No. 3 lens.

### DETAILED DESCRIPTION OF THE PREFERRED EMBODIMENT

There will be explained in detail below the preferred embodiment of the invention, to which, however, this invention is not limited.

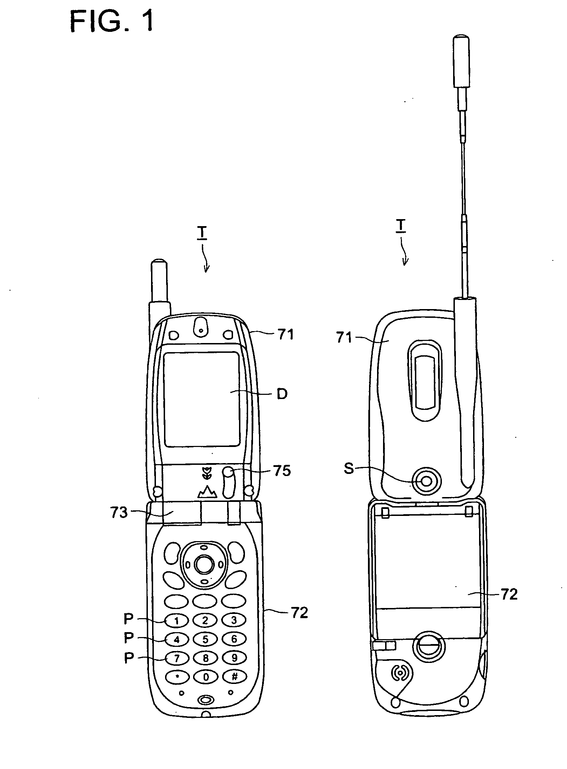

Fig. 1 is a view of appearance of portable telephone T as an example of a portable terminal equipped with an imaging device related to this invention.

Portable telephone T, shown in Fig. 1, is composed of upper casing 71 as a casing equipped with display screen D and lower casing 72 which is equipped with input buttons P, which are connected through hinge 73. Imaging device S is housed at the lower end of the display screen D in upper casing 71 and is positioned so that it can gather light from the'photographed object via an opening through the outer surface of upper casing 71. On the other hand, manual manipulation member 75 is located at the lower end of display screen D of upper casing 71.

This imaging device S may also be positioned at the upper end of display screen D on upper casing 71. Further, the portable telephone is not limited to a folding type.

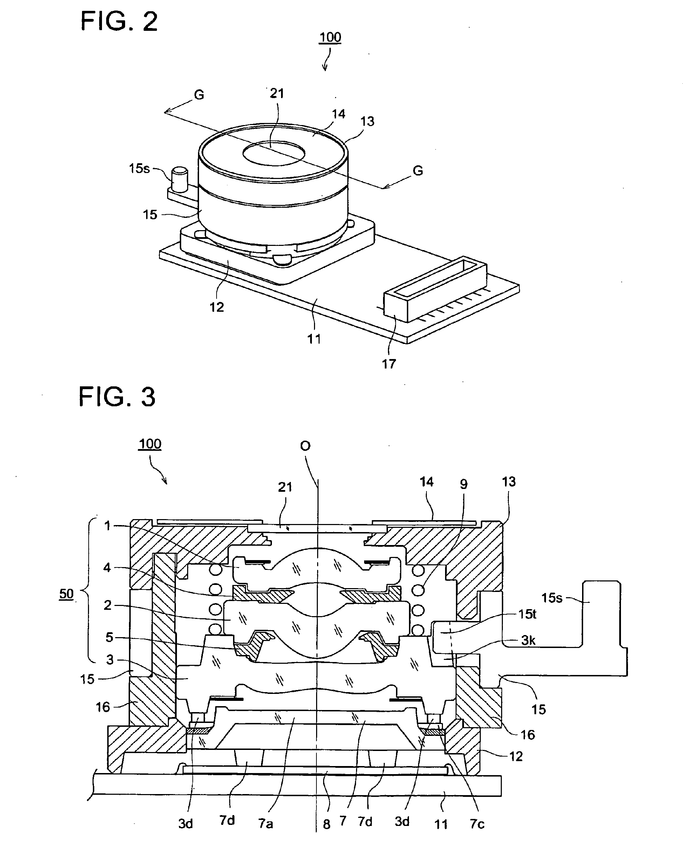

Fig. 2 is a perspective view of imaging device 100 equipped with an optical unit related to this invention. This imaging device 100 is installed at the position of imaging device S, as shown in Fig. 1.

As shown in Fig. 2, the outer portion of imaging device 100 is composed of printed circuit board 11 on which an image sensor is mounted, connector 17 for connection to other boards in the portable terminal, base member 12, translucent dust-proof plate 21, cap member 13, decorative plate 14 and rotary member 15 on which manipulation part 15S is formed. Manipulation part 15S is mechanically connected internally to manual manipulation member 75 shown in Fig.1 so that rotary member 15 is rotated via linkage to manual manipulation member 75. On printed circuit board 11, there are mounted electronic parts, such as various kinds of resistors and capacitors, although they are not illustrated in the figure.

Fig. 3 is a general cross-sectional view showing the internal structure of imaging device 100 equipped with the optical unit related to this invention. This figure shows a cross-sectional view taken on line G-G shown in Fig. 2. In the figures to be shown later, like identifying symbols are given to like functional parts to avoid overlap of explanation.

As shown in Fig. 3, regarding imaging device 100, there are arranged optical unit 50 composed of No. 1 lens 1, No. 2 lens 2, No. 3 lens 3, aperture plate 4 positioned between No. 1 lens 1 and No. 2 lens 2, aperture plate 5 positioned between No.2 lens 2 and No. 3 lens 3 and aperture plates fixed to the photographed object side of No. 1 lens 1 and the image plane side of No. 3 lens 3, and cam member 7 on which cam parts 7c are formed in the positions corresponding to those of three convexes 3d which are formed as one piece on a portion other than the optical effective surface on the image plane side of No. 3 lens 3, and image sensor 8 installed on printed circuit board 11.

As explained in detail later, regarding optical unit 50 which is unitized as one piece, flange part of No.3 lens 3 is urged by compression coil spring 9 toward image sensor 8. Thereby, optical unit 50 is positioned so that the distance to image sensor 8 through cam member 7 is set in the optical axis direction.

Cam member 7 is made of a translucent material and has translucent portion 7a for light flux from the photographed object, which is formed so as to cover the photoelectric conversion surface side of the image sensor and an infrared shield coating is applied to one surface of translucent portion 7a. On the other hand, plural legs 7d are integrally formed on cam member 7 and contact an area other than the photoelectric conversion surface on the photoelectric conversion surface side of image sensor 8.

Cam member 7 is fitted in the inside of the base member 12 and bonded with adhesives to be retained. Base member 12 is engaged with outer frame member 16 which encloses optical unit 50. On the outer surface of outer frame member 16, rotary member 15 is mounted rotatably. This rotary member 15 is so mounted that coupling part 15t, which is integrally formed as an inner part of the rotary member, is coupled to coupling part 3k of No.3 lens 3. Cap member 13 is mounted on outer frame member 16 after installation of compression coil spring 9. An aperture is equipped on side surface of outer frame member 16 and serves as a space in which coupling part 15t formed on the rotary member 15 can be rotated.

That is, coupling part 15t formed on rotary member 15 is rotated by rotation of manipulating part 15s of rotary member 15 supported on the outside of outer frame member 16. Accordingly, No. 3 lens 3 which is coupled to coupling part 15t, namely, optical unit 50 rotates, and thereby, movement of convexes 3d of No.3 lens 3 on the cam surfaces of cam parts 7c of cam member 7 moves the No.3 lens 3 in optical axis "O" direction against the urging force of compression coil spring 9. This makes it possible to accomplish close-up photography with a short distance focusing.

What is explained above is a general description for the internal structure of imaging device 100 equipped with optical unit 50 related to this invention.

Next, optical unit 50 related to this invention will be explained in detail. In the explanation to be given below, a surface formed for imaging is designated as an optical effective surface and the surrounding part which does not contribute to imaging is designated as a flange part (retaining part). In this example, a light shielding member having a aperture corresponds to aperture plates 4 and 5.

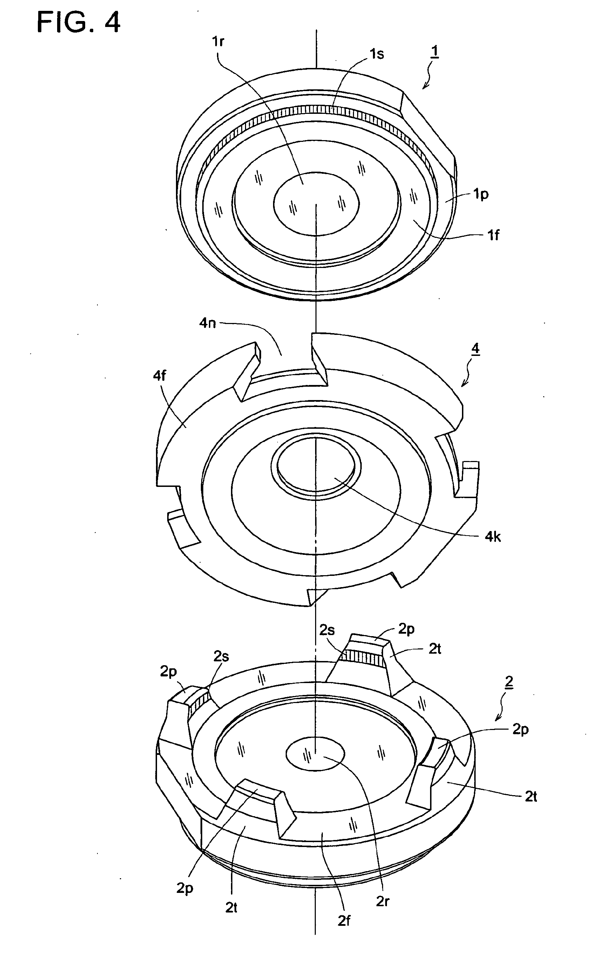

Fig. 4 is an exploded perspective view showing the structures of No. 1 lens 1, No. 2 lens 2 and aperture plate 4 located between the No.1 lens 1 and the No. 2 lens 2. The views of No. 1 lens 1 and aperture plate 4 in the figure are perspective ones viewed from the image plane side while the view of No. 2 lens 2 is a perspective one viewed from the photographed object side.

In Fig. 4, No. 1 lens 1 is composed so that optical effective surface 1r and flange part 1f formed on the periphery of the optical effective surface are integrally formed of a translucent material, while No. 2 lens 2 is composed so that optical effective surface 2r, flange part 2f, formed on the periphery of the optical effective surface, and four projections 2t on flange part 2f, namely, the projections protruded from the portion other than the optical effective surface are integrally formed of translucent materials. When the number of the projections is four as shown in Fig. 4, it is preferable that these projections are placed at intervals of about 90 degrees. On the other hand, aperture plate 4 has aperture 4k through which light flux from the photographed object passes for photographing and four cutouts 4n in the circumferential positions corresponding to projections 2t of No. 2 lens 2, and aperture plate 4 is made of a light shielding material. Arc part 4f of aperture plate 4 representing a light shielding member is made so that its diameter is the same as or bigger than the outer diameter of No. 1 lens 1 as shown in Fig. 3.

This No. 1 lens 1, No. 2 lens 2 and aperture plate 4 representing a light shielding member are assembled as follows.

Four projections 2t formed on No. 2 lens 2 protrude respectively up toward No. 1 lens 1 through cutouts 4n formed on aperture plate 4 and composed so that side faces 2s (hatched parts in Fig. 4) on projections 2t contact side face Is (hatched part in Fig. 4) on flange part If of No. 1 lens 1 and top faces 2p of projections 2t contact outer face of 1p on flange 1f of No. 1 lens 1. Aperture plate 4 is structured to be retained between No. 1 lens 1 and No.2 lens 2 with small clearance.

Thereby, No. 1 lens 1 and No. 2 lens 2 are positioned accurately both in the optical axis direction and in the direction perpendicular to the optical axis without reference to the thickness of aperture plate 4 located between the lenses, by mating contact between side faces 2s as well as top faces 2p on projections 2t of No. 2 lens 2 and side face 1s as well as outer face 1p on flange 1f of No. 1 lens 1.

Arc parts 4f formed on areas other than the cutouts 4n on aperture plate 4 representing a light shielding member, are interposed to lie between the areas other than the optical effective surfaces of No. 1 lens 1 and No. 2 lens 2. Thereby, unwanted light other than a photographing light flux, can be prevented from traveling through areas other than the optical effective surfaces of No. 1 lens 1 and No. 2 lens 2 facing each other, and by forming the outer diameter of arc parts of 4f of aperture plate 4 representing a light shielding member to be the same as or larger than the diameter of No.1 lens 1, it is possible to efficiently prevent unwanted light passing through any portion, other than the optical effective surface, from traveling into No. 2 lens 2 which is an optical member on the image plane side.

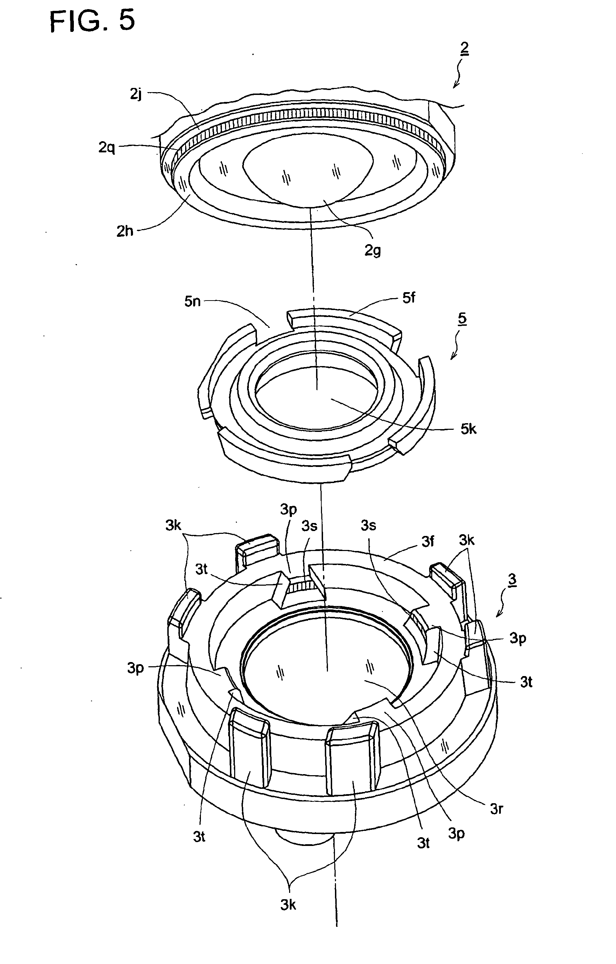

Fig. 5 is an exploded perspective view showing the structure of No. 2 lens 2, No. 3 lens 3 and aperture plate 5 which is located between No. 2 lens 2 and No. 3 lens 3. No. 2 lens 2 shown in Fig. 5 is the partial perspective view viewed from the image plane side while aperture plate 5 and No. 3 lens 3 show the perspective views viewed from the photographed object side.

In Fig. 5 stated above, on the image plane side of No. 2 lens 2, there are an optical effective surface on the image plane side indicated as 2g and a flange on the image plane side indicated as 2h, and No. 3 lens 3 is structured so that optical effective surface 3r, flange 3f formed on the circumference of 3r, four projections 3t protruding inward from the flange 3f, and coupling part 3k mentioned above are integrally formed of a translucent material. When the number of the projections is four as shown in Fig. 5, it is preferable that these projections are placed at intervals of about 90 degrees. On the other hand, aperture plate 5 has aperture 5k through which light flux from the photographed object passes for photography and four cutouts 5n in the circumferential positions corresponding to projections 3t of No. 3 lens 3.

No. 2 lens 2, No. 3 lens 3 and aperture plate 5 are assembled as follows.

Four projections 3t formed on No.3 lens 3 protrude toward No. 2 lens 2 through cutouts 5n formed on aperture plate 5 and composed so that side faces 3s (hatched part in Fig. 5) on projections 3t contact side face 2q (hatched part in Fig. 5) on flange part 2h of No. 2 lens 2 and top faces 3p of projections 3t contact outer face 2j on flange 2h of No. 2 lens 2. Aperture plate 5 is structured to be retained between No. 2 lens 2 and No.3 lens 3 with a small clearance.

Thereby, No. 2 lens 2 and No. 3 lens 3 are positioned accurately both in the optical axis direction and in the direction perpendicular to the optical axis without reference to the thickness of aperture plate 5 located between the lenses, by respective contact between side face 3s as well as top face 3p on projections 3t of No. 3 lens 3 and side face 2q as well as outer face 2j on flange 2h of No. 2 lens 2.

Further, arc parts 5f formed on areas other than the cutouts 5n on aperture plate 5 representing a light shielding member are interposed to lie between the areas other than the optical effective surfaces of No. 2 lens 2 and No. 3 lens 3. Thereby, unwanted light other than a photographing light flux can be prevented from traveling through areas other than the optical effective surfaces of No. 2 lens 2 and No. 3 lens 3 facing each other. Further, by forming the diameter of arc part 5f of aperture plate 5 representing a light shielding member, to be equal to or larger than the outer diameter of No. 2 lens 2, the effect of preventing traveling of unwanted light other than photographing light flux can be improved.

As shown above, No. 1 lens 1, No. 2 lens 2 and No.3 lens 3 are connected with each other so that projections 2t and 3t formed on the portion other than the optical effective surface contact portions, other than the optical effective surface on the other lenses, and are assembled as a unit by bonding each other with adhesives without influence from the aperture plate interposed between lenses, therefore it is possible to minimize deviation of distance between the lenses in the optical axis direction and the direction perpendicular to the optical axis and to obtain an optical unit composed of plural optical members, wherein there is not individual dispersion of focal point or reduction of contrast of photographed object image does not exist because of prevention of unwanted light transmission.

Further, a low cost optical unit can be obtained without increase of parts or countermeasures by means of insert moldings, because of preventive measures against unwanted light, taken with an aperture plate representing a light shielding member located between the lenses.

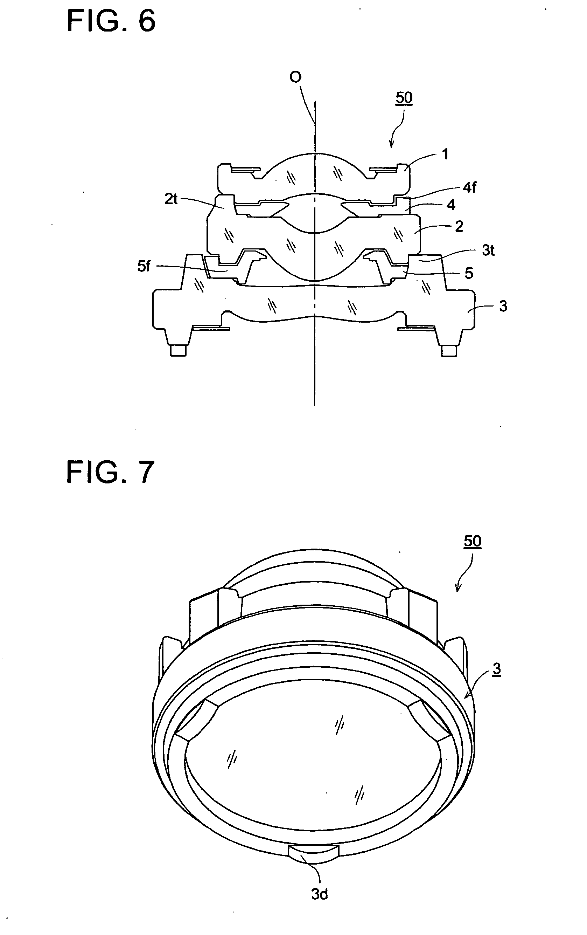

Fig. 6 shows a cross-sectional view of optical unit 50 related to this invention. On the left side of optical axis "O", there is shown a cross-sectional view taken on a plane including projections 2t of No. 2 lens 2, and on the right side of axis "O", there is shown a cross-sectional view taken on a plane including projections 3t of No. 3 lens 3.

Based on the cross-sectional view taken on a plane where No. 1 lens 1 and No. 2 lens 2 touch each other, shown on the left side of Fig. 6, arc part 5f of aperture plate 5 is located between No 2 lens 2 and No. 3 lens 3 to prevent transmission of unwanted light coming from No. 1 lens 1 to No. 3 lens 3 via contacting parts 2t. Similarly, based on the cross-sectional view taken on a plane where No. 2 lens 2 and No. 3 lens 3 touch each other, shown on the right side of Fig. 6, arc part 4f of aperture plate 4 is located between No 1 lens 1 and No. 2 lens 2.

As explained above, it is advisable to assemble No. 2 lens 2 and No. 3 lens 3 as an optical unit so that projections 2t of No. 2 lens 2 and projections 3t of No. 3 lens 3 are located out of phase with each other in circumferential direction, and thereby, unwanted light coming through projections 2t of No. 2 lens 2 is prevented from traveling into No. 3 lens 3 via arc parts 5f (refer to Fig. 5) of aperture plate 5.

Fig. 7 is a perspective view of optical unit 50 integrated as a unit. The figure is the one wherein the optical unit 50 is viewed from a lower point obliquely on the image sensor side.

As shown in Fig. 7, three convexes 3d are formed at the positions corresponding to those of cam parts 7c of cam member 7 described in Fig. 3, on portions other than the optical effective surface on the image sensor side.

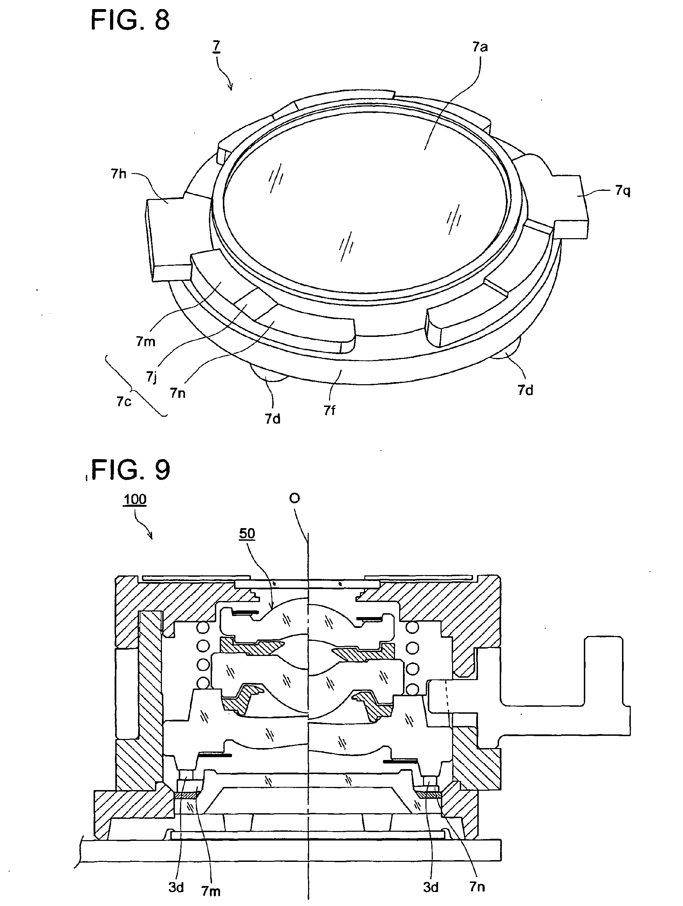

Fig. 8 is a perspective view of cam member 7. The figure shows cam member 7 viewed from the upper point obliquely on the photographed object side. This cam member 7 is made so that translucent part 7a is formed of translucent materials, covering the top face of image sensor 8.

As shown in Fig. 8, on the outer surface of cam member 7, convex 7h is formed and cam member 7 is positioned in the circumferential direction by fitting this convex 7h into a concave, which is not shown, on base member 12 shown in Fig. 3. Gate 7q formed in the place 180 degrees away from convex 7h is formed to be smaller in width and shorter in projecting length than convex 7h and is engaged with another concave, which is not shown, on base member 12. Side surface 7f on the outer circumference fits into an inner surface of base member 12, shown in Fig. 3.

Cam member 7 has cam parts 7c arranged at intervals of 120 degrees close to the outer circumference of cam member 7. Each of these cam parts 7c features high horizontal surface 7m, low horizontal surface 7n and inclined surfaces 7j connecting horizontal surfaces 7m and 7c, which are all different from each other in terms of position in the optical axis direction.

Three convexes 3d shown in Fig. 7 contact three cam parts 7c on cam member 7 shown in Fig. 8, and when they move from low horizontal surface 7n to high horizontal surface 7m via inclined surface 7j, the position (for example hyperfocal position) where a long distance is in focus is changed to the position for close-up photography, and when they move from high horizontal surface 7m to low horizontal surface 7n through inclined surface 7j the position for close-up photography is changed back to the position where the long distance is in focus.

Fig. 9 shows both the position for the close-up photography and the position where the long distance is in focus for optical unit 50 mounted in imaging apparatus 100. In Fig. 9, how the long distance is in focus is shown on the right side of the optical axis "O", and the condition for close-up photography is shown on the left side.

As shown on the right side of Fig. 9, convexes 3d contact low horizontal surfaces 7n to obtain the long distance focal point position, and as shown on the left side of the figure, convexes 3d contact high horizontal surfaces 7m to shift optical unit 50 toward the photographed object by prescribed distance to obtain the close-up photographing position.

Although the example of No.2 lens and No.3 lens having projections respectively was used in the explanation, it is naturally possible to structure the unit to have projections on both the photographed object side and the image plane side of No. 2 lens to contact No.1 lens and No. 3 lens respectively, or to structure the unit to have projections on No. 1 lens and No.3 lens to contact No.2 lens respectively.

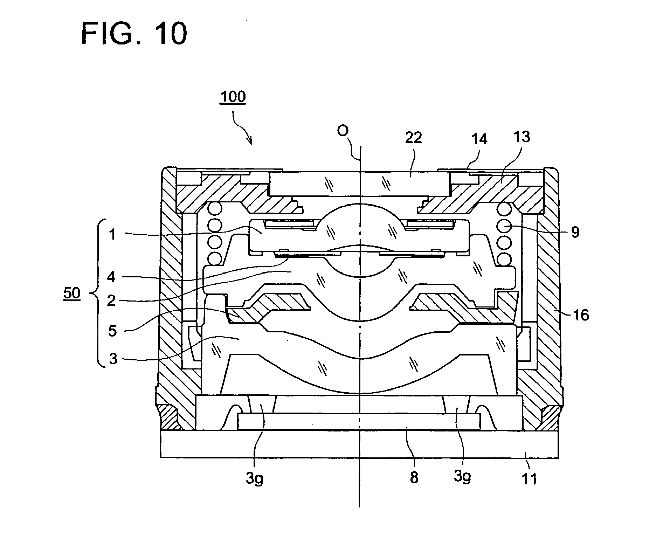

Fig. 10 is a schematic cross-sectional view of an internal structure of another example of imaging device 100 equipped with an optical unit relating to this invention. The imaging device 100 illustrated in Fig. 10 shows an example where this invention is employed for a fixed-focus type device. In a fixed-focus type imaging device of this example, manual manipulation member 75 is not necessary when the device is installed in a portable telephone shown in Fig. 1.

As shown in Fig. 10, in imaging device 100, optical unit 50 is solidly composed of No.1 lens 1, No.2 lens 2, No.3 lens 3, aperture plate 4 positioned between No.1 lens 1 and No.2 lens 2, aperture plate 5 positioned between No.2 lens 2 and No.3 lens 3 and an aperture plate fixed on photographed object side of No. 1 lens 1, wherein leg parts 3g are integrally formed at plural positions on image plane side surface other than optical effective surface of No. 3 lens, and the leg parts 3g contact surfaces other than a photoelectric conversion surface of the photoelectric conversion surface side on image sensor 8.

In this example, the light shielding member with an opening portion corresponds to aperture plate 5.

Regarding optical unit 50 which is unitized as one piece, a flange part of No.2 lens 2 is urged by compression coil spring 9 representing an urging member toward image sensor 8. Thereby, a distance between optical unit 50 and image sensor 8 in the optical axis direction is determined. Outer frame member 16 containing optical unit 50 is fixed on printed circuit board 11 and infrared shielding filter 22 is mounted on cap member 13.

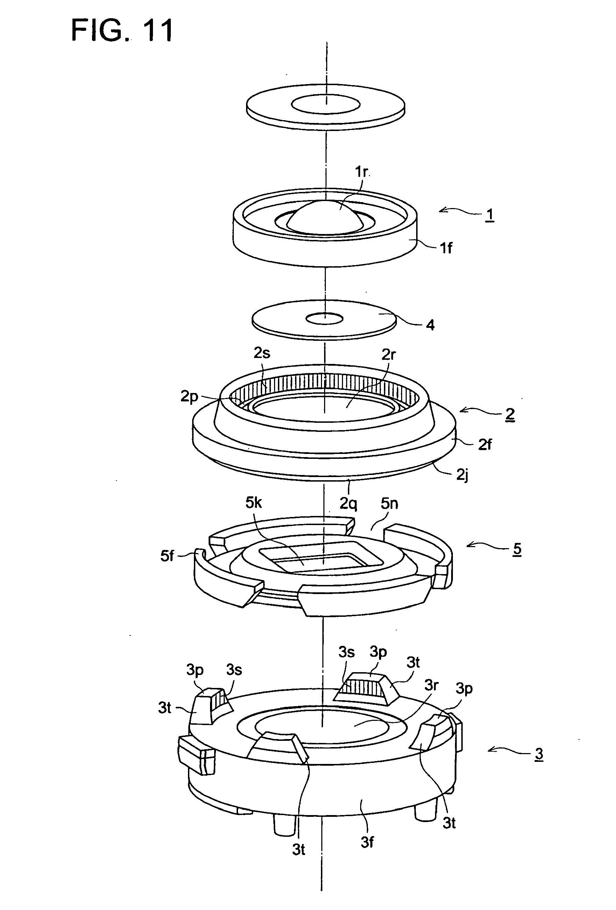

Fig. 11 is an exploded perspective view showing the structure of No. 1 lens 1, No. 2 lens 2, No. 3 lens 3, an aperture plate 4 located between No. 1 lens 1 and No. 2 lens 2, and an aperture plate 5 located between No. 2 lens 2 and No. 3 lens 3.

In Fig. 11, No. 1 lens 1 is composed so that optical effective surface 1r and flange part 1f formed on the periphery of the optical effective surface 1r are integrally formed of a translucent material, while No. 2 lens 2 is composed so that optical effective surface 2r and flange part 2f formed on the periphery of the optical effective surface 2r are integrally formed of a translucent material.

No. 1 lens 1, No. 2 lens 2 and aperture plate 4 representing a light shielding member are assembled as follows.

No. 1 lens 1 and No. 2 lens 2 are assembled, with the outer periphery of flange part If of No. 1 lens 1 being in contact with inner wall of flange part 2s of No.2 lens 2 (hatched portion in Fig. 11) and with the lower surface of flange part If of No. 1 lens 1 being in contact with step part 2p formed on inner wall of flange part 2s of no.2 lens 2. Aperture plate 4 is inserted between No. 1 lens 1 and No.2 lens 2, and is formed to be retained to maintain a small clearance. Thereby, No. 1 lens 1 and No. 2 lens 2 are positioned accurately through mutual contact, both in the optical axis direction and in the direction perpendicular to the optical axis, without being interfered by aperture plate 4 located between these lenses.

No. 3 lens 3 is structured so that optical effective surface 3r, flange part 3f formed on the outer circumference of 3r and four projections 3t formed on the flange part 3f are integrally formed of a translucent material. When the number of the projections is four as shown in Fig. 11, it is preferable that these projections are placed at intervals of about 90 degrees. On the other hand, aperture plate 5 has aperture 5k formed to be substantially rectangular through which a light flux from the object to be photographed passes for photographing and has four cutouts 5n in the circumferential positions corresponding to projections 3t of No. 3 lens 3 and is made of a light shielding material as shown in Fig. 11. By forming the aperture to be substantially rectangular, only the light flux necessary for photographing can be conducted to the imaging plane side and the image contrast of a photographed object can be improved.

No. 3 lens 3 and aperture plate 5 are assembled as follows.

No. 2 lens 2 and No. 3 lens 3 are assembled, with four projections 3t formed on No.3 lens 3 protruding toward No. 2 lens 2 through cutouts 5n formed on aperture plate 5, with side faces 3s (hatched part in Fig. 11) on projections 3t being in contact with side face 2q (hatched part in Fig 11) formed below flange part 2f of No. 2 lens 2, and with top faces 3p of projections 3t being in contact with lower face 2j on flange 2f of No. 2 lens 2. Aperture plate 5 is structured to be retained between No. 2 lens 2 and No.3 lens 3 to maintain a small clearance.

Thereby, No. 2 lens 2 and No. 3 lens 3 are positioned accurately both in the optical axis direction and in the direction perpendicular to the optical axis, without being interfered by the thickness of aperture plate 5 representing a light shielding member which has aperture 5k formed to be substantially rectangular and is located between these lenses.

Further, arc parts 5f formed on areas other than the cutouts 5n on aperture plate 5 are interposed to lie between the areas other than the optical effective surfaces of No. 2 lens 2 and No. 3 lens 3. Thereby, unwanted light other than a photographing light flux can be prevented from traveling through areas other than the optical effective surfaces of No. 2 lens 2 and No. 3 lens 3 facing each other. Further, by forming the diameter of arc part 5f of aperture plate 5 representing a light shielding member, to be equal to or larger than the outer diameter of No. 2 lens 2, the effect of preventing traveling of unwanted light other than a photographing light flux can be improved.

In an example of fixed-focus type device, No.1 lens 1, No. 2 lens 2 and aperture plate 4 can be structured in the same way as in Fig 4.

As explained above, it is possible to obtain a low cost optical unit composed of plural lenses which is stable without dispersion of focal point and is free from contrast loss of the photographed object image, because a distance between lenses is not affected by the thickness of a aperture plate and unwanted light traveling through portions other than the optical effective surface is shielded, by means of forming at least three projections, which contact other lenses, on the portions other than the optical effective surface of at least one lens, and by means of composing an optical unit so that a part of the aperture plate representing a light shielding member may be inserted into the portions other than the optical effective surface, excluding projections.

It becomes possible to obtain an imaging device and a portable terminal at low cost without loss of photographed object image contrast caused by unwanted light by means of using an imaging device equipped with this optical unit as well as a portable terminal equipped with this imaging device.

In the aforementioned embodiment, explanation has been given for an optical unit composed to employ three lenses, however, the invention is not limited to this case, and a unit composed of two lenses or four lenses does not depart from the range of this invention. Example with four projections located at intervals of approximate 90 degrees was used in the above explanation, however, three or more than three projections work sufficiently, and three projections located at intervals of approximate 120 degrees each provide an equivalent effect.

An optical unit composed of lenses and aperture plates was used in the aforementioned explanation, however, this invention is also applicable to an optical unit having optical members with a flat optical effective surface such as filters, and it does not depart from the invention.

In addition to this, although explanation was given for an optical unit related to the invention with an example of an imaging device mounted in a portable terminal, needless to say, it is also applicable to an optical system or a part of optical system such as an ordinary camera.

## Claims

1. An optical unit(50) comprising:
at least two light-transmitting optical members each having an optical effective surface and a retaining portion on at least a part of a circumference of the optical effective surface, at least one optical member of the two optical members is **characterised by** having at least three projections (2t) formed on the retaining portion of at least one surface thereof and the three projections being brought in contact with the other optical member to form a space between the two optical members and,
a light shielding member (5) interposed in the space and having an aperture and having at least three cutouts (4n) on an outer periphery of the light shielding member,
wherein the projections are respectively positioned in the cutouts so that the outer periphery is expanded into the retaining portion.

2. The optical unit(50) according to claim 1, wherein the projections have contacting surfaces which are brought in contact with the other optical member so as to fix positions of the two optical members in two positional directions of an optical axis direction and a direction perpendicular to the optical axis direction.

3. The optical unit (50) according to claim 1, wherein an outer diameter of the light shielding member(5) is made equal to or larger than that of at least one optical member of the two optical members facing the light shielding member.

4. The optical unit(50) according to claim 1, wherein the aperture of the light shielding member (5k) is formed to be substantially rectangular.

5. The optical unit (50) according to claim 1, wherein the optical unit (50) has at least first, second and third optical members, and a first set of at least three projections (2t) provided on the retaining portion between the first and second optical members and a second set of at least three projections provided on the retaining portion between the second and third optical members, and wherein positions of the first set of at least three projections are different from positions of the second set of at least three projections projected on a circle.

6. An imaging device (100) having the optical unit (50) described in claim 1.

7. A portable terminal having the imaging device(100) described in claim 6.

## Patentansprüche

1. Optische Einheit (50) mit:
mindestens zwei lichtübertragenden optischen Elementen, die jeweils eine effektive optische Oberfläche und einen Rückhalteabschnitt an mindestens einem Teil eines Umfangs der optisch effektiven Oberfläche aufweisen, wobei mindestens ein optisches Element der zwei optischen Elemente **dadurch gekennzeichnet ist, dass** es mindestens drei Vorsprünge (2t) aufweist, die an dem Rückhalteabschnitt mindestens einer Oberfläche hiervon ausgebildet sind, und die drei Vorsprünge in Kontakt mit dem anderen optischen Element gebracht sind, um einen Zwischenraum zwischen den beiden optischen Elementen zu bilden, und
einem Lichtabschirmungselement (5), das in den Zwischenraum eingefügt ist und eine Apertur und mindestens drei Ausschnitte (4n) an einem Außenumfang des Lichtabschirmungselements aufweist,
wobei die Vorsprünge jeweils in den Ausschnitten so positioniert sind, dass der Außenumfang in den Rückhalteabschnitt erweitert ist.

2. Optische Einheit (50) nach Anspruch 1, wobei die Vorsprünge Kontaktflächen haben, die mit dem anderen optischen Element in Kontakt gebracht sind, so dass Positionen der beiden optischen Elemente in zwei Positionsrichtungen, einer optischen Achsrichtung und einer Richtung senkrecht zu der optischen Achsrichtung, festgesetzt sind.

3. Optische Einheit (50) nach Anspruch 1, wobei ein Außendurchmesser des Lichtabschirmungselements (5) gleich oder größer als der des mindestens einen optischen Elements der beiden dem Lichtabschirmungselement zugewandten optischen Elemente gestaltet ist.

4. Optische Einheit (50) nach Anspruch 1, wobei die Apertur des Lichtabschirmungselements (5k) im wesentlichen rechteckig ausgebildet ist.

5. Optische Einheit (50) nach Anspruch 1, wobei die optische Einheit (50) mindestens erste, zweite und dritte optische Elemente, und einen ersten Satz von mindestens drei Vorsprüngen (2t), die an dem Rückhalteabschnitt zwischen den ersten und zweiten optischen Elementen vorgesehen sind, und einen zweiten Satz von mindestens drei Vorsprüngen, die an dem Rückhalteabschnitt zwischen den zweiten und dritten optischen Elementen vorgesehen sind, aufweist, und wobei Positionen des ersten Satzes von mindestens drei Vorsprüngen sich von Positionen des zweiten Satzes von mindestens drei Vorsprüngen, projiziert auf einen Kreis, unterscheiden.

6. Bilderzeugungsvorrichtung (100) mit der optischen Einheit (50) nach Anspruch 1.

7. Tragbares Daten-Endgerät mit der Bilderzeugungsvorrichtung (100) nach Anspruch 6.

## Revendications

1. Unité optique (50) comprenant :
au moins deux organes optiques transmettant la lumière, ayant chacun une surface optique efficace et une partie de maintien sur au moins une partie d'une circonférence de la surface optique efficace, au moins un organe optique des deux organes optiques est **caractérisé par** le fait d'avoir au moins trois appendices (2t) formés sur la partie de maintien d'au moins l'une de ses surfaces et les trois appendices étant mis en contact avec l'autre organe optique pour former un espace entre les deux organes optiques, et
un organe formant écran à la lumière (5) interposé dans l'espace et ayant une ouverture et ayant au moins trois découpes (4n) sur la périphérie externe de l'organe formant écran à la lumière,
et où les appendices sont respectivement placés dans les découpes de sorte que la périphérie externe s'étend dans la partie de maintien.

2. Unité optique (50) selon la revendication 1, dans laquelle les appendices ont des surfaces de contact qui sont mises en contact avec l'autre organe optique afin de fixer des positions des deux organes optiques en ce qui concerne deux directions de position, à savoir une direction d'axe optique et une direction perpendiculaire à la direction d'axe optique.

3. Unité optique (50) selon la revendication 1, dans laquelle un diamètre externe de l'organe formant écran à la lumière (5) est égal ou supérieur à celui d'au moins un organe optique parmi les deux organes optiques en regard de l'organe formant écran à la lumière.

4. Unité optique (50) selon la revendication 1, dans laquelle l'ouverture de l'organe formant écran à la lumière (5k) est formée de façon à être sensiblement rectangulaire.

5. Unité optique (50) selon la revendication 1, dans laquelle l'unité optique (50) comporte des premier, deuxième et troisième organes optiques, et un premier ensemble d'au moins trois appendices (2t) situés sur la partie de maintien entre les premier et deuxième organes optiques et un deuxième ensemble d'au moins trois appendices situés sur la partie de maintien entre les deuxième et troisième organes optiques, et où des positions du premier ensemble d'au moins trois appendices diffèrent de positions du deuxième ensemble d'au moins trois appendices projetées sur un cercle.

6. Dispositif d'imagerie (100) comportant l'unité optique (50) selon la revendication 1.

7. Terminal portable comportant le dispositif d'imagerie (100) selon la revendication 6.
